# EUROPEAN PATENT APPLICATION

(11) **EP 1 524 052 A2**
(43) Date of publication of application: **20.04.2005**
(21) Application number: 04445102.9
(22) Date of filing: 01.10.2004
(51) Int. Cl.: B23B 29/04, B23K 26/28

(54) **Cutting tool together with a method for the manufacture thereof**

(30) Priority: 16.10.2003 SE 0302728
(71) Applicant: Sandvik AB, 811 81 Sandviken (SE)
(72) Inventor: Nyström, Leif, 811 71 Järbo (SE); Matiasson, Lars, 742 35 Östhammar (SE); Eriksson, Kenth, 747 41 Gimo (SE)
(74) Representative: Taquist, Lennart

(57) **Abstract**

In a first aspect, the invention relates to a method for achievement of a welded joint between two parts, e.g. a coupling part (1) and a drill shank (2), included in a cutting tool. Characteristic of the invention is that a shim (14) is applied in a peripherically opening gap between the parts, which shim has a predetermined shape corresponding to the shape of the gap, and then the material is melted and welded together in the boundary zone between the contact surfaces of the shim and the analogous contact surfaces of the two parts by means of a laser beam (22) directed to the periphery of the shim. In a second aspect, the invention also relates to a cutting tool as such.

## Description

### Technical Field of the Invention

In a first aspect, this invention relates to a method for the manufacture of such tools that are intended for chip-removing machining, which tools comprise two parts of metal permanently united via an interface. In a second aspect, the invention also relates to a tool, intended for cutting or chip-removing machining of primarily metal, of the type that comprises a coupling part of metal and a second part permanently united to the same via an interface, which part likewise consists of metal.

### Prior Art

Tools of the above generally mentioned kind are found within all three main areas within the field of cutting machining, i.e., drilling, milling and turning. Within the two first-mentioned areas, the tools are of a rotary character and useful for machining of fixed as well as movable workpieces, while tools for turning are fixed and have the purpose of machining rotary workpieces. The basis of the present invention is problems that have been observed within the range of rotary cutting tools, particularly drills. However, this does not preclude that the solution described henceforth can be applied to turning tools.

For many different reasons, modern drills are made of a more sophisticated type by assembly of a coupling part, which is compatible with a certain type of machine tools or tool holders, i.e., has a shape that corresponds to the shape of the tool holder, as well as an insert-carrying working part in the form of a shank formed with chip and cooling-medium channels, on the free end of which cutting inserts or so-called loose tops can releasably be mounted. The shank and the coupling part are united permanently to each other via an interface between the rear end of the shank and the front end of the coupling part. As single permanent joint between the shank and the coupling part, a male-female joint having a press fit has previously without exception been used. More precisely, the shank is formed at the rear end thereof with a male member in the form of a spigot, which is pressed into a seating formed in the front end of the coupling part, not rarely at the same time as the seating is widened by heating the coupling part and then is shrunk by cooling. In order to be able to transfer the requisite torque between the coupling part and the shank with a sufficient safety margin, the male spigot and the seating have to have a considerable axial extension with the purpose of establishing a sufficiently great contact surface between each other. Therefore, in most cases, the axial length of the male spigot has been at least 1,5 times greater than the diameter of the drill shank. The fact that the male spigot has had considerable length has naturally resulted in the drilling tool in question in its entirety having got a great total length; something that in practice implies a plurality of disadvantages. Besides a great dead weight, high consumption of material in the manufacture and extra great space requirements in connection with storage and transportation, the great length of the drilling tool has meant a tendency of the tool to be set in vibration because this phenomenon easier arises the longer and slender the same is.

Against the above background, ways have recently been sought to shorten, with maintained performance of transmission of torque, the spigot and seating, respectively, of the male-female joint upon the greatest possible reduction of the total length of the drilling tool. In this connection, the possibility of also providing, in addition to a male-female joint, a welded joint between the shank and the coupling part has been considered. Thus, a plurality of experiments have been made to weld together said components by means of conventional welding technique, which makes use of supply of material during simultaneous supply of heat. Tests with MIG welding as well as TIG welding have, however, turned out to be unfruitful, among other things, as a consequence of hydrogen embrittlement in the interface between the components and mediocre or unacceptable precision, so far that the exact positioning of the cutting inserts in relation to the coupling part was lost.

### Objects and Features of the Invention

In a first aspect, the present invention aims at obviating the above-mentioned drawbacks in previously known cutting tools of rotatable type, such as drills and milling cutters, and at providing an improved tool as well as an improved method for the manufacture of cutting tools. Thus, a primary object of the invention is to create conditions for welding together two metallic parts included in a cutting tool, in particular parts of steel, with high accuracy so far that the inevitable heat release during a welding operation must not lead to any deformations or material changes of the type that could dislodge the two parts from an exact, predetermined set position in relation to each other. An additional object is to enable realization of a welded joint, which by virtue of the position thereof in the tool can be utilized in an optimal way in respect of the capacity thereof to transfer forces between the two tool parts. Another object, related to rotatable cutting tools, such as drills and milling cutters, is to provide a tool having a minimal length and simultaneously maintained or even improved strength and rigidity, with the utmost intention that the tool during operation should give improved machining precision.

According to the invention, at least the primary object is attained by the method defined in the independent claim 1. Advantageous ways to carry out the method are further defined in the dependent claims 2-5.

In another aspect, the invention also relates to an improved cutting tool as such by application of the method according to the invention. The features of the new tool according to the invention are defined in the characterizing clause of the independent claim 6. Preferred embodiments of the tool according to the invention are furthermore defined in the dependent claims 7-12.

### Summary of the General Idea According to the Invention

The invention is based on the idea to apply a shim in a gap between two tool parts that should be welded together, which shim has a predetermined and substantially invariable shape corresponding to the shape of the gap, and which in a cool state is welded along the periphery thereof by means of at least one laser beam, which at a considerable speed is brought to be moved along the shim, the laser beam during the movement thereof in relation to the shim and surrounding portions of the tool parts melting the metal in the shim and the tool parts, respectively, in very limited, almost point-like areas, the size of which is determined by the diameter of the beam (spot size). In such a way, welding and the ensuing heat release take place very locally in a point area, which quickly is moved along the shim; something which ensures that heat deformations, heat embrittlement and the like, do not arise in the interfaces or contact surfaces between the shim and the tool parts. During experiments that form the basis of the invention, it has accordingly been possible to observe that the tool immediately after finalized welding is so cool that the weld quite easily could be touched by a hand. Applied to a rotatable cutting tool, the invention can in an advantageous way be utilized with the purpose of reducing the tool length, at the same time as the strength of the tool in respect of the capacity of transmission of force or torque in an interface between two composed parts, e.g. a coupling part and a drill shank, not only is maintained but even can be improved.

### Additional Elucidation of Prior Art

Welding together metal parts in general by means of laser welding is well known, per se, e.g. by GB 2344549, US 5343014, FR 2656556, EP 0491959 and JP 58090389. However, no one of the welding procedures, which are accounted for in the same publications, utilizes the inventive principle of applying a separate, metallic shim in a gap opening peripherically, which shim is of a predetermined and invariable shape, and then by means of a quickly movable laser beam weld the periphery of the shim exposed outward.

### Brief Description of the Appended Drawings

In the drawings:
Fig. 1 is a perspective view regarded obliquely from behind of a cutting tool in the form of a drill made in accordance with the invention,
   - Fig. 2: is a perspective exploded view of the same drill regarded obliquely from the front,
   - Fig. 3: is an exploded view regarded straight from the side of the same drill,
   - Fig. 4: is a schematic, partial side view of an enlarged interface between a coupling part and a shank included in the drill, the interface being shown without any shim,
   - Fig. 5: is a side view of the same interface during a first welding operation,
   - Fig. 6: is an analogous side view during a second welding operation,
   - Fig. 7: is a perspective view of a turning tool, more precisely a slotting tool, in the assembled state, in the tool a coupling part being included as well as a second part in the form of a so-called serration plate, which is welded together with the coupling part in accordance with the method according to the invention,
   - Fig. 8: is a perspective exploded view of the tool according to fig. 6,
   - Fig. 9: is an additional exploded view of just the coupling part and the serration plate as well as a shim therebetween, and
   - Fig. 10: is a perspective view of the back side of the serration plate.

### Detailed Description of Preferred Embodiments of the Invention

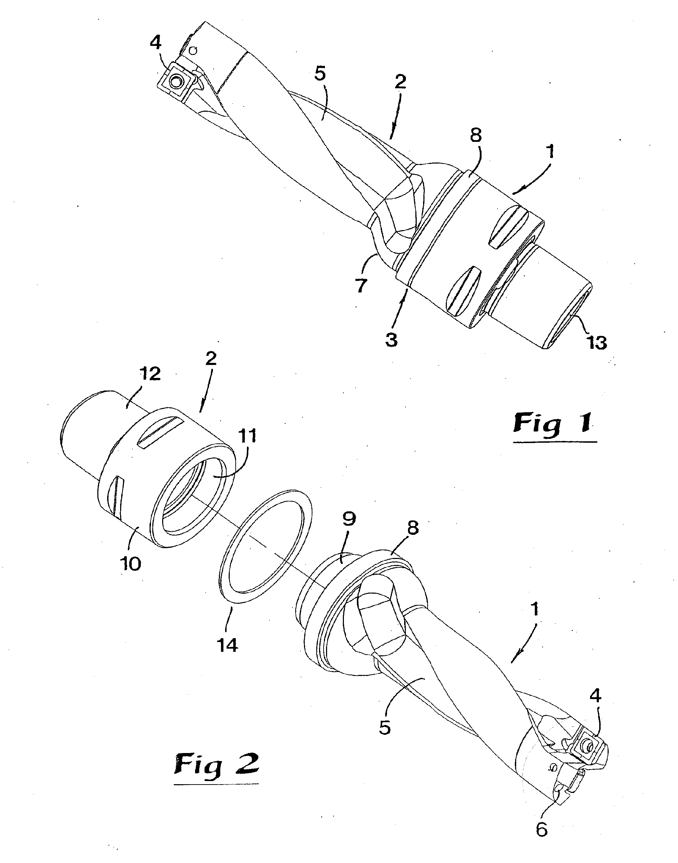

As has been mentioned by way of introduction, the problems that form the basis of the present invention are primarily associated with rotatable cutting tools, one type of which, viz. a drill, is represented in figs. 1-5. Said drill includes a coupling part 1, as well as a second part in the form of a shank 2 permanently united to the same via an interface. In fig. 1, said interface is indicated at the reference designation 3. The shank 2 has a cylindrical, long narrow basic shape and is at the free, front end thereof formed with seatings or so-called insert pockets for releasable, replaceable cutting inserts 4. In the envelope surface of the shank, chip channels 5 are formed for evacuation of chips, which are separated by the cutting inserts 4. Internally in the shank, there are also cooling-liquid channels 6, which mouth in the tip of the shank and have the purpose of cooling the cutting inserts. At the rear end thereof, the shank transforms via a successively thickened transition portion 7 in a collar 8, the envelope surface of which is cylindrical. Rearward from this collar, a male member 9 extends in the form of a spigot, which likewise has a cylindrical envelope surface. Although said male member commonly is denominated spigot, the same may include an internal cavity in which cooling liquid, which is fed via the coupling part, is received to be forward out in the cooling-liquid channels 6.

A front part 10 of the coupling part 12 has a cylindrical basic shape and includes an internal, female-like seating 11, which is delimited by a cylindrical surface having substantially the same inner diameter as the outer diameter of the male spigot 9. At the rear, the cylinder part or the sleeve 10 transforms into a coupling piece 12, the shape of which, more precisely the cross-section shape, is adapted to the shape of the tool holder in which the drill is intended to be fixed. A type of coupling piece usually occurring on the market is known under the denomination COROMANT CAPTO®. However, also a number of other types of coupling pieces are found depending on the machine equipment of the user. It should be observed that the coupling part 2 is hollow throughout, so that the cooling liquid may be fed in from the tool holder via a rear opening 13.

The above-mentioned spigot 9 and the seating 11 together form a male-female joint, which by means of press fit and/or shrink fit in a previously known way permanently unites the shank to the coupling part. The joint may be established by heating the coupling part, and then, after pressing-in of the spigot 9 in the seating 11, the same is allowed to cool down, so that the seating shrinks. In order to allow, with a certain safety margin, transfer of a torque between the coupling part and the shank that is prescribed for the individual drill, previously the male spigot 9 and the seating 11 have had a considerable length or axial extension in order to, in such a way, present a sufficiently large, force-transferring contact surface. In practice, the length of the male spigot has accordingly amounted to at least 1,5 times the diameter of the drill.

Furthermore, it should be mentioned that the coupling part as well as the shank generally are made from steel. Thus, in the shank 2, a steel of the type SS 142225 is advantageously used, which is a low-alloy heat-treatment steel having good weldability, and which, in addition to such alloy materials as Si, Mn, S, Cr and Mo, contains 0,22-0,29 % of coal (C). However, in the coupling part 1, a steel of the type THG 2000 is used, which is a chrome-molybdenum-vanadium-alloyed steel developed for, among other things, drills and milling bodies, the carbon content of which is within the range of 0,35-0,42 %. Experiments to weld the two drill parts 1, 2 of such a steel by means of conventional welding, such as MIG welding or TIG welding, have failed.

So far, the drill shown in figs. 1-3 has been described hitherto, the same is in all essentials previously known.

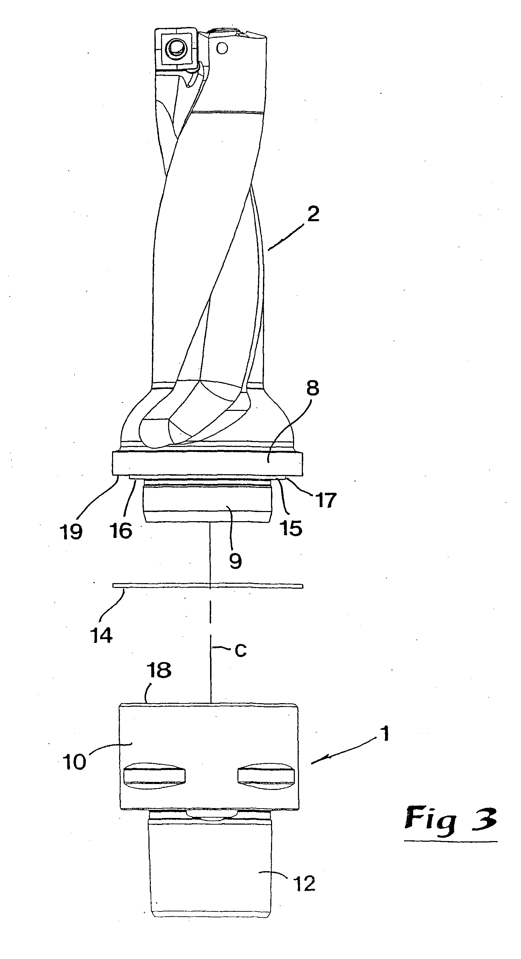

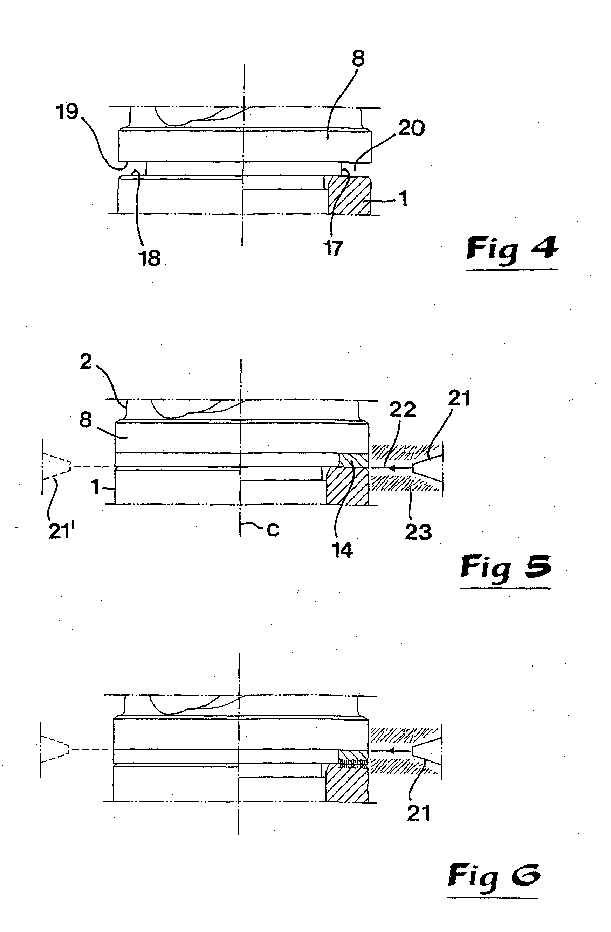

New and characteristic of the tool according to the present invention is that the shank and the coupling part, in addition to via said male-female joint 9, 11, is united to each other also via a welded joint, which generally is provided by laser welding using a pre-formed shim 14 in the shape of a ring. As is seen in figs. 3-5, said spacing ring 14 cooperates with a shoulder 15 formed adjacent to the collar 8 of the shank 2, which is delimited by a planar end surface 16 and a cylindrical envelope surface 17, and which has a diameter that, on one hand, is smaller than the outer diameter of the collar 8 and, on the other hand, is greater than the outer diameter of the cylindrical spigot 9. Upon assembly of the shank and the coupling part, the planar end surface 16 of the shoulder 15 is pressed against a likewise planar, front end or contact surface 18 on the coupling part 1. Outside the shoulder 15, the collar 8 has a ring-shaped, planar contact surface 19, which like the end surface 16 as well as the surface 18 extends perpendicularly to the geometrical centre axis C of the drilling tool. Thus, when the two tool parts are mounted together, a ring-shaped, circumfering gap is formed between the surfaces 19 and 18, which in fig. 4 is designated 20.

The spacing ring 14 has a flat basic shape so far that the same in addition to two cylindrical, inner and outer edge surfaces, is delimited by two opposite planar surfaces, which are mutually parallel. The outer diameter of the shoulder 15 is substantially equally great as the inner diameter of the ring 14, at the same time as the outer diameter of the ring substantially corresponds to the outer diameter of the collar 8. In other words, the shape of the spacing ring corresponds to the shape of the gap 20. In practice, the spacing ring should have a thickness (= the distance between the opposite, planar surfaces of the ring) of 0,5-1,0 mm, e.g. 0,7 mm. In this connection, it should be pointed out that the thickness of the ring does not need to be exactly equally great as the width of the gap (= the distance between the contact surfaces 18, 19). Thus, the thickness of the ring may be some or a few hundredths of millimetre smaller than the width of the gap. In such a way, it is guaranteed that the spacing ring is not exposed to any deforming pressing forces in connection with the establishment of the male-female joint 9, 11.

As material in the spacing ring, generally steel may be used. Experiments that form the basis of the invention have shown that austenitic steel, in particular austenitic steel of the stainless type, i.e., steel that has been alloyed with suitable quantities of chromium and nickel, is particularly well suitable for the purpose.

### The Manufacture of the Cutting Tool According to the Invention

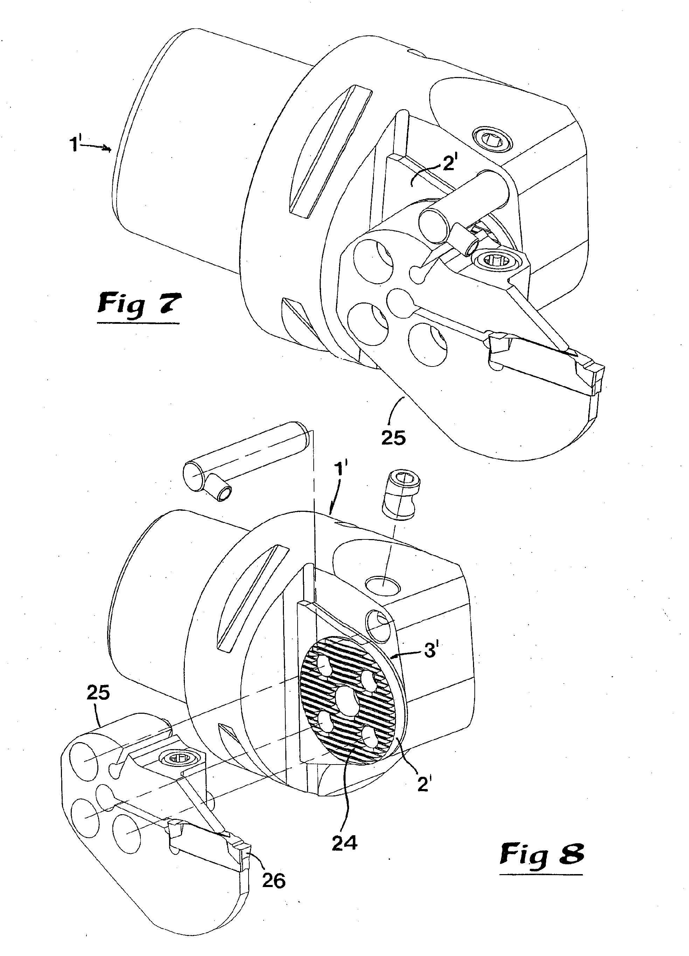

When the shank and coupling part of the drill should be united to each other, in a first step the ring 14 is applied outside the male spigot 9, after which the same is pressed into the seating 11, e.g. in a state when the same is widened by heating of the coupling part, this providing a first, conventional permanent joint between the components in question. In the next step, a second permanent joint is provided, viz. the welded joint, between the coupling part and the shank, more precisely in the way that is schematically illustrated in figs. 5 and 6. The welding is carried out by means of a schematically shown laser-welding device 21, which emits a laser beam 22 having a variable diameter or spot size. In order to avoid oxidation by the impact of the oxygen of the air, the welding can be carried out in presence of a surrounding protective gas 23. During welding, the laser beam and the drilling tool are movable in relation to each other. In practice, said mobility may be realized in such a way that the laser-welding device 21 is stationary and the tool rotatable in a suitable holder (not shown). The welding is carried out in two operations, a first one of which is illustrated in fig. 5. In this figure, there is seen that the laser beam 22 is kept radially directed to the radial contact plane that is present between one side (the bottom side) of the ring 14 and the ring-shaped, planar contact surface 18 on the coupling part 1. In practice, the laser beam 22 may have a diameter of 0,3 mm, the geometrical centre axis of the beam being located in the same radial plane perpendicular to the centre axis C as the contact surfaces between the ring 14 and the coupling part 1 are located in. After the laser beam having been directed to an arbitrary point along the periphery of the ring, the tool is brought to rotate, more precisely at a periphery speed of at least 100 mm/s. When the laser beam hits and penetrates into the contact surfaces between the ring and the coupling part, the material melts locally in the area of the beam and is welded together. The heat release is, per se, intense in the immediate vicinity of the beam, but because the beam is moved along the periphery of the ring at a comparatively high speed, the total heat release is limited to a minimum, which in no way gives rise to any deformations or material migration in the interface between the shank and the coupling part. When the tool has rotated one revolution (360°) the radiation is interrupted. Welding of the spacing ring 14 against the coupling part 1 is then completed.

In the next operation, the ring 14 is also welded against the shank. As is seen in fig. 6, the laser beam and the tool are then moved axially in relation to each other, so that the laser beam is located in the same radial plane as the contact surfaces between the ring and the collar 8 of the shank. After this, welding is carried out in the same way, i.e., the tool is rotated one revolution for the beam to melt the material together in a circumfering, endless welding bead, the plane of which is perpendicular to the centre axis C.

As an example, it should be mentioned that welding of a 39 mm drill, which is rotated at a periphery speed of 112 mm/s in relation to the laser beam, can be achieved on 0,7 s. Immediately after finalized welding, the weld obtained has substantially room temperature.

To the left in figs. 5 and 6, a second laser-beam device 21' is outlined by means of dashed lines. This device may be placed diametrically opposite the device 21. In this case, a circumfering, ring-shaped weld may be provided by turning the tool only half a revolution, i.e., in half of the time.

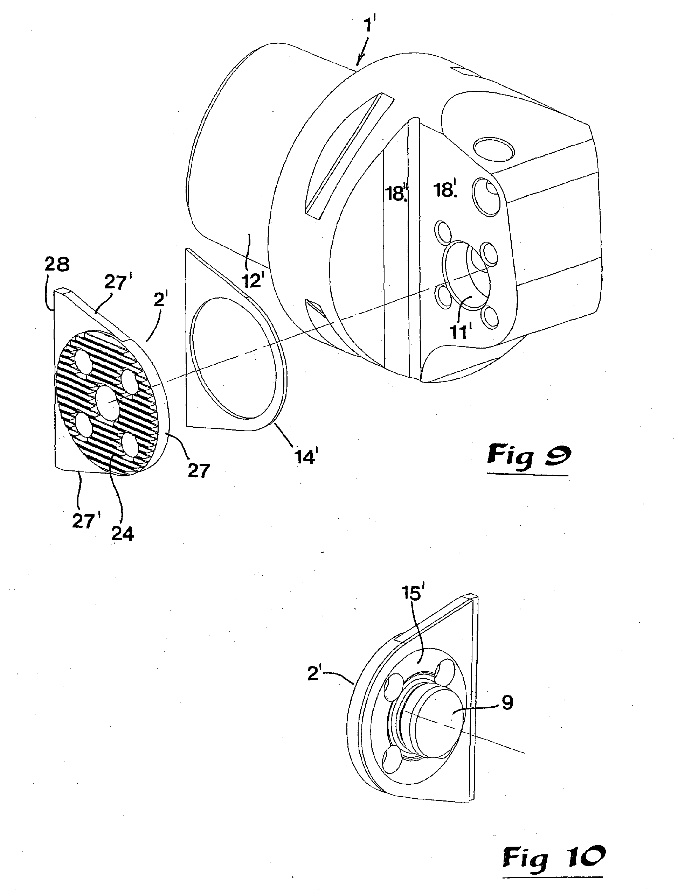

Reference is now made to figs. 7-10, which illustrate a cutting tool of fixed type, viz. a turning tool for parting or groove-slotting operations. In this case, the second part, which should be permanently connected to a coupling part 1', consists of a plate 2', which is formed with a serration surface 24 arranged to co-operate with an analogous serration surface (not visible) on a detachable holder part 25, in which a releasable so-called slotting tool 26 is included. In the same way as in the drill according to the above, it is of great importance that the serration plate 2' is united to the coupling part or the adapter 1' in a way that allows transfer of great forces between the parts, and that guarantees a meticulous location of the serration surface in relation to the coupling part (with the purpose of attaining a correct position setting of the slotting tool 26 in relation to the coupling piece 12' of the coupling part). In this case, the plate 2' (see fig. 9) has a partially circular and partially triangular shape so far that the same is delimited by a partly cylindrical edge surface 27, which transforms into two planar and straight edge surfaces 27', which extend at a mutual acute angle and which end in a common, rear edge surface 28, which is straight and planar as well as forms a base in an imaginary triangle. On the back side of the plate 2', a male member 9' is formed in the form of a cylindrical spigot, which is insertable with press fit in a corresponding, cylindrical seating 11' in the coupling part. Thus, the spigot 9' and the seating 11' form a male-female joint, which should be supplemented with a welded joint of the above described type. For this purpose, a shim 14' is arranged between the inside of the plate 2' and a planar contact surface 18' on the coupling part, the contour shape of which shim corresponds to the contour shape of the plate 2'. In the shim, there is a cylindrical hole, the inner diameter of which corresponds to the outer diameter on a cylindrical shoulder 15' (see fig. 10) formed on the inside of the plate.

When the spigot 9', upon mounting and fixation of the serration plate 2', is inserted into the seating 11', the rear edge 28 of the plate is located in abutment (with a very fine fit) against a second contact surface 18" formed on the coupling part, which extends perpendicularly to the contact surface 18'. Possibly, but not necessarily, the spigot 9' can be fixed by heating and shrinkage. Such fixation is, however, incidental as a consequence of the abutment of the edge surface 28 against the contact surface 18" making turning of the plate in relation to the coupling part impossible. When the spigot 9' is inserted, the shim 14' has been applied against the inside of the plate, so that the shim is abutted in close contact against the contact surface 18' as well as the inner, planar surface of the plate 2', as is shown in fig. 8. In this state, laser welding is carried out in the previously described way, i.e., in two consecutive operations a laser beam is brought to move along the periphery of the shim in two axially spaced-apart planes. In this case, each individual operation may furthermore be divided into a plurality of steps. Thus, in a first step, just one weld may be welded along a linear edge portion 27', during linear or straight movement of the coupling part in relation to the laser beam. In a second step, the tool is turned in order to provide a weld along the cylindrical edge portion of the plate 2', and then a third, linear weld along the second edge portion 27' is provided by again moving the coupling part linearly in relation to the laser beam.

### Advantages of the Invention

A fundamental advantage of the method according to the invention is that two metallic parts included in a cutting tool can be welded together via a strong and reliable welded joint during utilization of minimal total heat release in order to carry out the requisite welding or melting process in the material. This means that a predetermined positioning of the parts in relation to each other is not influenced by the welding operation, whereby, for instance, the exact position of an insert-carrying component in relation to a coupling part may be maintained in a reliable way. When applied to rotatable tools of the type drills or milling cutters, the described welding technique may furthermore be utilized with the purpose of shortening tools. Thus, as is best seen in fig. 3, the length or the axial extension of the male member in the male-female joint of the tool may be reduced to less than half of the diameter of the tool shank. Thus, in the drill in question, the total length of the drill may be reduced by at least the same measure as the drill diameter. In this connection, attention should be paid to the fact that the made welded joint is peripherical, i.e., located in an area where drills and milling cutters have the greatest diameter thereof. This means that the force-transferring capacity of the welded joint becomes optimum.

### Feasible Modifications of the Invention

The invention is not solely limited to the embodiments described above and shown in the drawings. For instance, the welds obtained need not necessarily be continuous along the entire periphery or outwardly exposed edge of the shim. Thus, during the welding it is feasible to intermittently switch off the laser beam during continued turning or straight movement of the tool in relation to the welding device. In such a way, a welded joint consisting of a plurality of peripherically spaced-apart, spot or patch-like welding points is provided. It should also be mentioned that the spacing ring not necessarily has to be plane. Thus, it is feasible to give the same, for instance, a conical shape (cf. cup spring washer), the surrounding parts being formed so that the gap gets an analogous shape. Furthermore, the method according to the invention may be applied to welding together entirely other parts in arbitrary cutting tools than the parts that have been exemplified in the drawings. Although the described embodiments illustrate external welding, also internal welding is feasible.

### List of Reference Designations

- 1: = coupling part
- 2: = drill shank
- 3: = interface
- 4: = cutting insert
- 5: = chip channel
- 6: = cooling-liquid channel
- 7: = transition portion
- 8: = collar
- 9: = male spigot
- 10: = cylinder sleeve
- 11: = seating
- 12: = coupling piece
- 13: = end opening
- 14: = shim
- 15: = shoulder
- 16: = contact surface
- 17: = envelope surface
- 18: = contact surface
- 19: = contact surface
- 20: = gap
- 21: = welding device
- 22: = laser beam
- 23: = protective gas
- 24: = serration surface
- 25: = insert holder
- 26: = slotting tool
- 27: = edge surface
- 28: = edge surface

## Claims

1. Method for the manufacture of such tools that are intended for chip-removing machining, which tools comprise two parts of metal permanently united via an interface (3), **characterized by** the steps of forming a peripherically opening gap (20) in at least one of said two parts (1, 2, 2'), applying a separate shim (14, 14') of metal in said gap, and welding the exposed periphery of the shim against said two parts (1, 2, 2') by means of a laser beam (22).

2. Method according to claim 1, **characterized in that** the welding is carried out in at least two operations, viz. a first operation during which the laser beam (22) is kept directed to a first contact plane between the shim (14) and one of the parts (1), and a second operation during which the laser beam (22) has been moved and is kept directed to a contact plane between the shim and the second part (2, 2').

3. Method according to claim 2, **characterized in that** a continuous endless weld is provided during the individual welding operation.

4. Method according to claim 2 or 3, **characterized in that** the individual welding operation is carried out in two or more part operations during which the relative motions between the laser beam (22) and the shim (14, 14') differ.

5. Method according to any one of the preceding claims, **characterized in that** the relative motion between the laser beam (22) and the shim (14, 14') is carried out at a speed of at least 100 mm/s.

6. Tool for chip-removing machining, comprising a coupling part (1, 1') of metal and a second part (2, 2') permanently united to the same via an interface (3), which second part likewise consists of metal, **characterized in that** adjacent to said interface (3), a peripherically opening gap (20) is formed in at least one of the two parts, in which gap a separate, metallic shim (14, 14') is applied, which has a shape that is predetermined and corresponding to the shape of the gap, and which along the periphery thereof exposed outward is laser welded against the coupling part (1, 1') as well as the second part (2, 2').

7. Tool according to claim 6, **characterized in that** at least one of said parts (1,1'; 2, 2') is manufactured from carbon steel and that the shim (14, 14') consists of an austenitic steel.

8. Tool according to claim 6 or 7 in the form of a rotatable tool, e.g. a drill, of the type that in addition to a coupling part (1) comprises an insert-carrying working part (2), which is permanently united to the coupling part via a male-female joint of the type that has a male member (9) included in the working part (2) and inserted with press fit in a female-like seating (11) in the coupling part (1), **characterized in that** the shim is in the shape of a ring (14), which is welded against two mutually opposite, ring-shaped contact surfaces (18, 19) on the coupling part (1) and the working part (2), respectively.

9. Tool according to claim 8, **characterized in that** said contact surfaces (18, 19) are planar and extend in a radial plane perpendicularly to the geometrical centre axis (C) of the tool, and that the ring (14) is flat and has two planar and mutually parallel surfaces for welding against said contact surfaces (18, 19).

10. Tool according to claim 8 or 9, **characterized in that** the gap (20) for the spacing ring (14) is formed by means of a shoulder (15), which together with the male member (9) projects rearward from the contact surface (19) of the working part (2), and which has a diameter that, on one hand, is smaller than the outer diameter of the contact surface (19), and on the other hand greater than the diameter of the male member (9), the thickness of the shoulder deciding the width of the gap (20).

11. Tool according to claim 10, **characterized in that** the thickness of the spacing ring (14) is a little smaller than the width of the gap in order to eliminate risk of pressure stress on the ring in connection with establishment of the press fit of the male-female joint.
